# EUROPEAN PATENT APPLICATION

(11) **EP 4 815 133 A1**
(43) Date of publication of application: **30.09.2026**
(21) Application number: 24939530.2
(22) Date of filing: 20.12.2024
(51) Int. Cl.: H01M 50/209, H01M 50/244, H01M 50/249, H01M 50/30

(54) **BATTERY AND ELECTRIC DEVICE**

(30) Priority: 21.05.2024 CN 202410635995
(71) Applicant: Contemporary Amperex Technology Co., Limited, Ningde, Fujian 352100 (CN)
(72) Inventor: CHAN, Libing, Ningde, Fujian 352100 (CN); MENG, Wulei, Ningde, Fujian 352100 (CN); LIU, Bin, Ningde, Fujian 352100 (CN)
(74) Representative: Ran, Handong
(86) International application number: PCT/CN2024/141109
(87) International publication number: WO 2025/241518

(57) **Abstract**

The embodiments of the present application provide a battery and an electric device. The battery comprises a first layer of battery cells and a second layer of battery cells, wherein the first layer of battery cells and the second layer of battery cells are stacked in a first direction; the first layer of battery cells comprises a plurality of first battery cells; a first pressure relief mechanism is disposed at the end of each first battery cell in a second direction, with the first direction being perpendicular to the second direction; the second layer of battery cells comprises a plurality of second battery cells; and a second pressure relief mechanism is disposed at the end of each second battery cell in the second direction. On the basis of the technical solution provided in the present application, the reliability of the battery can be improved.

## Description

### CROSS-REFERENCE TO RELATED APPLICATIONS

The present application claims priority to Chinese Patent Application No. 202410635995.2, filed on May 21, 2024 and entitled "Battery and Electric Device", which is incorporated herein by reference in its entirety.

### TECHNICAL FIELD

The present application relates to the field of battery technologies, and in particular, to a battery and an electric device.

### BACKGROUND

Energy conservation and emission reduction are the key to the sustainable development of the automotive industry, and electric vehicles have become an important component of the sustainable development of the automotive industry due to energy saving and environment protection advantages thereof. For electric vehicles, battery technology is an important factor for the development thereof.

In the process of manufacturing batteries, the reliability of a battery is an issue that cannot be ignored. Therefore, how to improve the reliability of the battery is a technical problem that urgently needs to be solved in battery technologies.

### SUMMARY

The present application provides a battery and an electric device, which can improve reliability of the battery.

The present application is implemented through the following technical solutions:

According to a first aspect, embodiments of the present application provide a battery, comprising a first layer of battery cells and a second layer of battery cells. The first layer of battery cells and the second layer of battery cells are stacked in a first direction. The first layer of battery cells comprises a plurality of first battery cells, and each first battery cell is provided with a first pressure relief mechanism; and the second layer of battery cells comprises a plurality of second battery cells, and each second battery cell is provided with a second pressure relief mechanism. The orientation of the first pressure relief mechanism and the orientation of the second pressure relief mechanism are each disposed at an angle to the first direction.

According to the battery in the embodiments of the present application, the first layer of battery cells and the second layer of battery cells are stacked in the first direction, which can improve a space utilization rate inside the battery in the first direction, thereby facilitating improvement of energy density of the battery. The orientation of the first pressure relief mechanism and the orientation of the second pressure relief mechanism are each disposed at an angle to the first direction, so that when the first pressure relief mechanism is actuated or the second pressure relief mechanism is actuated, the emissions discharged by the first pressure relief mechanism are unlikely to affect the second battery cell, or the emissions discharged by the second pressure relief mechanism are unlikely to affect the first battery cell. This can reduce a risk of thermal propagation when the battery cell experiences thermal runaway, so that the battery has high reliability.

According to some embodiments of the present application, the first pressure relief mechanism is disposed at one end of the first battery cell in a second direction; and the second pressure relief mechanism is disposed at one end of the second battery cell in the second direction, and the second direction is perpendicular to the first direction.

In the foregoing solution, the first pressure relief mechanism is disposed at one end of the first battery cell in the second direction, and the emissions released when the first pressure relief mechanism is actuated are unlikely to be directed toward the second battery cell, thereby reducing impact of the emissions on the second battery cell, and reducing the risk of thermal propagation when the battery cell experiences thermal runaway. The second pressure relief mechanism is disposed at one end of the second battery cell in the second direction, and the emissions released when the second pressure relief mechanism is actuated are unlikely to be directed toward the first battery cell, thereby reducing impact of the emissions on the first battery cell, and reducing the risk of thermal propagation when the battery cell experiences thermal runaway.

According to some embodiments of the present application, the orientation of the first pressure relief mechanism and the orientation of the second pressure relief mechanism are both parallel to the second direction.

In the foregoing solution, the orientation of the first pressure relief mechanism is perpendicular to the first direction, and the emissions released when the first pressure relief mechanism is actuated are unlikely to affect the second battery cell, thereby reducing impact of the emissions on the second battery cell, reducing the risk of thermal propagation, and improving reliability of the battery. The orientation of the second pressure relief mechanism is perpendicular to the first direction, and the emissions released when the second pressure relief mechanism is actuated are unlikely to affect the first battery cell, thereby reducing impact of the emissions on the first battery cell, reducing the risk of thermal propagation, and improving reliability of the battery.

According to some embodiments of the present application, the battery further comprises a box body, and the first layer of battery cells and the second layer of battery cells are disposed in the box body; and the box body comprises a first wall portion, the first wall portion is disposed opposite to the first pressure relief mechanism in the second direction, a first collection cavity is formed inside the first wall portion, and the first collection cavity is configured to collect emissions of the first battery cell when the first pressure relief mechanism is actuated.

In the foregoing solution, the first wall portion is disposed opposite to the first pressure relief mechanism, and when the first pressure relief mechanism is actuated, the emissions discharged by the first pressure relief mechanism can be collected by the first collection cavity, thereby reducing impact of the emissions on another battery cell.

According to some embodiments of the present application, the battery further comprises a third pressure relief mechanism, the third pressure relief mechanism is disposed on the first wall portion, and the third pressure relief mechanism is configured to release the emissions in the first collection cavity.

In the foregoing solution, configuration of the third pressure relief mechanism allows for release of the emissions in the first collection cavity, thereby reducing internal pressure of the first collection cavity, and improving reliability of the battery.

According to some embodiments of the present application, the first wall portion has a first surface facing the first layer of battery cells, the first surface is provided with a first through hole, the first through hole is in communication with the first collection cavity, and the first through hole is disposed corresponding to the first pressure relief mechanism.

In the foregoing solution, configuration of the first through hole allows the emissions released by the first pressure relief mechanism to enter the first collection cavity, thereby further reducing impact of the emissions on another battery cell.

According to some embodiments of the present application, the box body further comprises a second wall portion, the second wall portion is disposed opposite to the second pressure relief mechanism in the second direction, a second collection cavity is formed inside the second wall portion, and the second collection cavity is configured to collect emissions of the second battery cell when the second pressure relief mechanism is actuated.

In the foregoing solution, the second wall portion is disposed opposite to the second pressure relief mechanism, and when the second pressure relief mechanism is actuated, the emissions discharged by the second pressure relief mechanism can be collected by the second collection cavity, thereby reducing impact of the emissions on another battery cell.

According to some embodiments of the present application, the second wall portion is integrally formed with the first wall portion.

In the foregoing solution, the second wall portion is integrally formed with the first wall portion, which facilitates processing and manufacturing.

According to some embodiments of the present application, the battery further comprises a fourth pressure relief mechanism, the fourth pressure relief mechanism is disposed on the second wall portion, and the fourth pressure relief mechanism is configured to release the emissions in the second collection cavity.

In the foregoing solution, configuration of the fourth pressure relief mechanism allows for release of the emissions in the second collection cavity, thereby reducing internal pressure of the second collection cavity, and improving reliability of the battery.

According to some embodiments of the present application, the second wall portion has a second surface facing the second layer of battery cells, the second surface is provided with a second through hole, the second through hole is in communication with the second collection cavity, and the second through hole is disposed corresponding to the second pressure relief mechanism.

In the foregoing solution, configuration of the second through hole allows the emissions released by the second pressure relief mechanism to enter the second collection cavity, thereby further reducing impact of the emissions on another battery cell.

According to some embodiments of the present application, the battery further comprises a box body, and the first layer of battery cells and the second layer of battery cells are disposed in the box body; and the box body comprises an isolation component, the isolation component is located between the first layer of battery cells and the second layer of battery cells in the first direction, the first layer of battery cells is connected to the isolation component, the second layer of battery cells is connected to the isolation component, and the isolation component carries the first layer of battery cells and the second layer of battery cells.

In the foregoing solution, configuration of the isolation component can separate the first layer of battery cells from the second layer of battery cells; and the isolation component carries the first layer of battery cells and the second layer of battery cells, gravity of the first layer of battery cells and gravity of the second layer of battery cells are both applied to the isolation component, and the isolation component provides an acting force to overcome gravity for both the first layer of battery cells and the second layer of battery cells.

According to some embodiments of the present application, a first flow channel for accommodating a heat exchange medium is formed inside the isolation component.

In the foregoing solution, configuration of the first flow channel, and the first layer of battery cells and the second layer of battery cells sharing a thermal management component, can adjust temperatures of the first layer of battery cells and the second layer of battery cells, thereby facilitating improvement of reliability of the battery.

According to some embodiments of the present application, the first layer of battery cells comprises a first battery cell group and a second battery cell group that are arranged at intervals in the second direction, and the second direction is perpendicular to the first direction; and the box body further comprises a first partition piece, the first partition piece is disposed on the isolation component, and the first partition piece is disposed between the first battery cell group and the second battery cell group in the second direction.

In the foregoing solution, configuration of the first partition piece can improve installation stability of the first battery cell group and the second battery cell group.

According to some embodiments of the present application, in the second direction, the first pressure relief mechanism of the first battery cell group is disposed on the side of the first battery cell group facing away from the second battery cell group, and the first pressure relief mechanism of the second battery cell group is disposed on the side of the second battery cell group facing away from the first battery cell group.

In the foregoing solution, the first pressure relief mechanism of the first battery cell group and the first pressure relief mechanism of the second battery cell group are disposed facing away from each other in the second direction, which can reduce impact of pressure relief of the first pressure relief mechanism of the first battery cell group on the second battery cell group, and reduce impact of pressure relief of the first pressure relief mechanism of the second battery cell group on the first battery cell group.

According to some embodiments of the present application, the first battery cell group and the second battery cell group are each connected to the first partition piece.

In the foregoing solution, gravity of the first battery cell group and gravity of the second battery cell group are both applied to the first partition piece, and the first partition piece provides an acting force to overcome gravity for both the first battery cell group and the second battery cell group.

According to some embodiments of the present application, a second flow channel for accommodating a heat exchange medium is formed inside the first partition piece.

In the foregoing solution, configuration of the second flow channel, and the first battery cell group and the second battery cell group sharing a thermal management component, can adjust temperatures of the first battery cell group and the second battery cell group, thereby facilitating improvement of reliability of the battery.

According to some embodiments of the present application, the first partition piece is integrally formed with or welded to the isolation component.

In the foregoing solution, the first partition piece is integrally formed with the isolation component, which can improve structural strength. The first partition piece is welded to the isolation component, which makes it less difficult to manufacture.

According to some embodiments of the present application, the box body further comprises two first wall portions disposed opposite to each other in the second direction, the second direction is perpendicular to the first direction, the first layer of battery cells is disposed between the two first wall portions, and the isolation component is connected to the two first wall portions.

In the foregoing solution, the first layer of battery cells is disposed between the two first wall portions, and the two first wall portions can protect the first layer of battery cells. The isolation component is connected to the two first wall portions, which can improve assembly strength.

According to some embodiments of the present application, the isolation component is integrally formed with or welded to the two first wall portions.

In the foregoing solution, the isolation component is integrally formed with the two first wall portions, resulting in high connection strength between the isolation component and the two first wall portions, which helps improve structural stability of the battery. The isolation component is welded to the two first wall portions, which makes it less difficult to manufacture.

According to some embodiments of the present application, the battery further comprises a first cover body, the first cover body is connected to the two first wall portions, and the first layer of battery cells is located between the first cover body and the isolation component in the first direction.

In the foregoing solution, the first cover body is connected to the two first wall portions to form accommodating space for accommodating the first layer of battery cells; and in addition, the first layer of battery cells can be assembled and maintained by disassembling the first cover body, which helps improve assembly efficiency and reduce maintenance costs.

According to some embodiments of the present application, the second layer of battery cells comprises a third battery cell group and a fourth battery cell group that are arranged at intervals in the second direction, and the second direction is perpendicular to the first direction; and the battery further comprises a second partition piece, the second partition piece is disposed on the isolation component, and the second partition piece is disposed between the third battery cell group and the fourth battery cell group in the second direction.

In the foregoing solution, configuration of the second partition piece can improve installation stability of the third battery cell group and the fourth battery cell group.

According to some embodiments of the present application, in the second direction, the second pressure relief mechanism of the third battery cell group is disposed on the side of the third battery cell group facing away from the fourth battery cell group, and the second pressure relief mechanism of the fourth battery cell group is disposed on the side of the fourth battery cell group facing away from the third battery cell group.

In the foregoing solution, the second pressure relief mechanism of the third battery cell group and the second pressure relief mechanism of the fourth battery cell group are disposed facing away from each other in the second direction, which can reduce impact of pressure relief of the second pressure relief mechanism of the third battery cell group on the fourth battery cell group, and reduce impact of pressure relief of the second pressure relief mechanism of the fourth battery cell group on the third battery cell group.

According to some embodiments of the present application, the third battery cell group and the fourth battery cell group are each connected to the second partition piece.

In the foregoing solution, gravity of the third battery cell group and gravity of the fourth battery cell group are both applied to the second partition piece, and the second partition piece provides an acting force to overcome gravity for both the third battery cell group and the fourth battery cell group.

According to some embodiments of the present application, a third flow channel for accommodating a heat exchange medium is formed inside the second partition piece.

In the foregoing solution, configuration of the third flow channel, and the third battery cell group and the fourth battery cell group sharing a thermal management component, can adjust temperatures of the third battery cell group and the fourth battery cell group, thereby facilitating improvement of reliability of the battery.

According to some embodiments of the present application, the second partition piece is integrally formed with or welded to the isolation component.

In the foregoing solution, the second partition piece is integrally formed with the isolation component, which can improve structural strength. The second partition piece is welded to the isolation component, which makes it less difficult to manufacture.

According to some embodiments of the present application, the box body further comprises two second wall portions disposed opposite to each other in the second direction, the second layer of battery cells is disposed between the two second wall portions, and the isolation component is connected to the two second wall portions.

In the foregoing solution, the second layer of battery cells is disposed between the two second wall portions, and the two second wall portions can protect the second layer of battery cells. The isolation component is connected to the two second wall portions, which can improve assembly strength.

According to some embodiments of the present application, the isolation component is integrally formed with or welded to the two second wall portions.

In the foregoing solution, the isolation component is integrally formed with the two second wall portions, resulting in high connection strength between the isolation component and the two second wall portions, which helps improve structural stability of the battery. The isolation component is welded to the two second wall portions, which makes it less difficult to manufacture.

According to some embodiments of the present application, the battery further comprises a second cover body, the second cover body is connected to the two second wall portions, and the second layer of battery cells is located between the second cover body and the isolation component in the first direction.

In the foregoing solution, the second cover body is connected to the two second wall portions to form accommodating space for accommodating the second layer of battery cells; and in addition, the second layer of battery cells can be assembled and maintained by disassembling the second cover body, which helps improve assembly efficiency and reduce maintenance costs.

According to some embodiments of the present application, the first direction is parallel to the direction of gravity.

In the foregoing solution, the first layer of battery cells and the second layer of battery cells are stacked in the first direction, which can make space in the direction of gravity properly used, thereby improving the space utilization rate.

According to a second aspect, the embodiments of the present application further provide an electric device, comprising the battery provided in any of the foregoing embodiments.

Additional aspects and advantages of the present application will be partly provided in the following description, and partly become evident in the following description or understood through the practice of the present application.

### BRIEF DESCRIPTION OF THE DRAWINGS

To describe the technical solutions in the embodiments of the present application more clearly, the following briefly describes the accompanying drawings required for describing the embodiments. It should be understood that the following accompanying drawings show only some embodiments of the present application, and therefore should not be considered as a limitation on the scope. A person of ordinary skill in the art may further obtain other related accompanying drawings according to these accompanying drawings without creative efforts.
FIG. 1 is a schematic diagram of a structure of a vehicle according to some embodiments of the present application;
FIG. 2 is a cross-sectional view of a battery according to some embodiments of the present application;
FIG. 3 is a schematic exploded view of some structures according to some embodiments of the present application;
FIG. 4 is a schematic diagram of a structure of a box body according to some embodiments of the present application;
FIG. 5 is a schematic diagram of assembly between a first layer of battery cells and an isolation component and between a second layer of battery cells and the isolation component according to some embodiments of the present application; and
FIG. 6 is a schematic exploded view of a structure of a battery according to some embodiments of the present application.

In the drawings, the figures are not drawn to actual scale.

Description of reference signs: 100: Battery; 10: First layer of battery cells; 10a: First battery cell group; 10b: Second battery cell group; 11: First battery cell; 111: First pressure relief mechanism; 112: First electrode terminal; 20: Second layer of battery cells; 20a: Third battery cell group; 20b: Fourth battery cell group; 21: Second battery cell; 211: Second pressure relief mechanism; 30: Box body; 30a: First side wall; 30b: Second side wall; 31: First wall portion; 311: First collection cavity; 312: First surface; 313: First through hole; 314: First protruding portion; 32: Second wall portion; 321: Second collection cavity; 322: Second surface; 323: Second through hole; 324: Second protruding portion; 33: Isolation component; 331: First flow channel; 34: First partition piece; 341: Second flow channel; 35: Second partition piece; 351: Third flow channel; 41: Third pressure relief mechanism; 42: Fourth pressure relief mechanism; 51: First cover body; 52: Second cover body; 200: Controller; 300: Motor; 1000: Vehicle; X: First direction; Y: Second direction; and Z: Third direction.

### DETAILED DESCRIPTION OF PREFERRED EMBODIMENTS

To make the objectives, technical solutions, and advantages of the embodiments of the present application clearer, the following clearly and completely describes the technical solutions in the embodiments of the present application with reference to the accompanying drawings in the embodiments of the present application. Apparently, the described embodiments are some but not all of the embodiments of the present application. All other embodiments obtained by those of ordinary skill in the art based on the embodiments of the present application without creative efforts shall fall within the protection scope of the present application.

Unless otherwise defined, all technical and scientific terms used in the present application have the same meaning as commonly understood by those skilled in the art to which the present application belongs. The terms used in the description of the present application herein are merely for the purpose of describing specific embodiments and are not intended to limit the present application. The terms "include", "be provided with", and any other variants thereof in the specification, claims, and accompanying drawings of the present application are intended to cover a non-exclusive inclusion. The terms "first", "second", and the like in the description and claims of the present application or in the drawings are used to distinguish between different objects, and are not used to describe a specific sequence or a primary-secondary relationship.

An "embodiment" in the present application means that a specific feature, structure, or characteristic described with reference to the embodiment may be included in at least one embodiment of the present application. The phrase in various places in the description does not necessarily all refer to the same embodiment, or a separate or alternative embodiment mutually exclusive of other embodiments. Those skilled in the art explicitly and implicitly understand that the described embodiments in the present application may be combined with another embodiment.

In the description of the present application, it should be further noted that, unless explicitly specified and defined otherwise, the terms "mounted", "connected", "connect", and "attached" are to be understood in a broad sense. For example, it may be fixed connection, detachable connection, or integral connection; it may be direct connection, may be indirect connection through an intermediate medium, or may be internal communication between two elements. Those skilled in the art can understand specific meanings of these terms in the present application according to specific situations.

In the present application, the term "and/or" is only an associative relationship for describing associated objects, indicating that three relationships may be present. For example, A and/or B may indicate the following three cases: presence of only A, presence of both A and B, and presence of only B. In addition, the symbol "/" in the present application generally represents an "or" relationship between associated objects.

In the present application, "plurality" means two or more than two (including two). Similarly, "a plurality of groups" means two or more than two groups, and "a plurality of pieces" means two or more than two pieces.

In some embodiments, the battery may be a battery module, and when there are a plurality of battery cells, the plurality of battery cells are arranged and fixed to form a battery module.

In some embodiments, the battery may be a battery pack including a battery box and a battery cell, and the battery cell or a battery module is accommodated in the battery box.

In some embodiments, the battery box may be a part of a chassis structure of a vehicle. For example, a part of the battery box may be at least a part of a floor of the vehicle, or a part of the battery box may be at least a part of a transverse beam and a longitudinal beam of the vehicle.

In some embodiments, the battery may be an energy storage device. The energy storage device includes an energy storage container, an energy storage cabinet, and the like.

In the embodiments of the present application, the battery cell may be a secondary battery, which refers to a battery cell that may be continuously used by activating an active material by means of charging the battery cell after discharging thereof.

As an example, the battery cell may be a prismatic battery cell, a pouch battery cell, or a battery cell of another shape. The prismatic battery cell includes a square-shell battery cell, a blade-shaped battery cell, and a polygon prism battery cell, for example, a hexagonal prism battery cell.

The battery cell includes a shell and a pressure relief mechanism, the pressure relief mechanism is disposed on the shell, and the pressure relief mechanism is configured to be actuated to release internal pressure and temperature of the shell.

The pressure relief mechanism refers to an element or component that can be actuated to release the internal pressure or temperature. The pressure relief mechanism can take a form of an explosion-proof valve, a gas valve, a pressure relief valve, or a safety valve, or the like, and can specifically adopt a pressure-sensitive or temperature-sensitive element or structure. That is, when the internal pressure or temperature of the battery cell reaches a predetermined threshold, the pressure relief mechanism performs an action, or a weak structure provided in the pressure relief mechanism is damaged, thereby forming an opening or channel for releasing the internal pressure or temperature.

"Actuate" mentioned in the present application means that the pressure relief mechanism takes an action or is activated to a specific state such that the internal pressure and temperature of the battery cell are released. The action taken by the pressure relief mechanism may include, but is not limited to: breaking, rupturing, tearing, opening, or the like of at least a portion of the pressure relief mechanism. When the pressure relief mechanism is actuated, high-temperature and high-pressure materials inside the battery cell are discharged outward as emissions from an actuated portion. In this way, the battery cell can release pressure and temperature under controllable pressure or temperature conditions, thereby avoiding the occurrence of potential more serious accidents.

Emissions from the battery cell mentioned in the present application include, but are not limited to: an electrolyte solution, dissolved or fragmented positive and negative electrode plates, fragments of a separator, high-temperature and high-pressure gases generated by a reaction, flames, and the like.

In the development of battery technologies, various design factors, for example, performance parameters such as energy density, discharge capacity, and charge/discharge rate are simultaneously taken into consideration. In addition, reliability of the battery needs to be taken into consideration.

In some embodiments, in order to improve energy density of the battery, the battery is generally provided with many battery cells, for example, a plurality of layers of battery cells are disposed in the battery box. When the plurality of layers of battery cells are stacked, the pressure relief mechanism of the battery cell is generally disposed at one end of the battery cell in a stacking direction, the pressure relief mechanism is directed toward a battery cell in an adjacent layer, the orientation of the pressure relief mechanism is parallel to the stacking direction, and the emissions released when the pressure relief mechanism is actuated are sprayed toward the battery cell in the adjacent layer. In this configuration manner, because the orientation of the pressure relief mechanism of the battery cell is parallel to the stacking direction, when the battery cell experiences thermal runaway, the emissions released by the pressure relief mechanism of the battery cell are sprayed toward the battery cell in the adjacent layer, which is likely to affect the battery cell in the adjacent layer, thereby resulting in thermal propagation and low reliability of the battery.

To reduce a risk of thermal propagation between two adjacent layers of battery cells caused by the emissions of the pressure relief mechanism, the present application provides a battery, where the battery includes a first layer of battery cells and a second layer of battery cells, and the first layer of battery cells and the second layer of battery cells are stacked in a first direction. The first layer of battery cells includes a plurality of first battery cells, and each first battery cell is provided with a first pressure relief mechanism; and the second layer of battery cells includes a plurality of second battery cells, and each second battery cell is provided with a second pressure relief mechanism. The orientation of the first pressure relief mechanism and the orientation of the second pressure relief mechanism are each arranged at an angle to the first direction, which can improve reliability of the battery.

In such a battery, because the orientation of the first pressure relief mechanism is disposed at an angle to the first direction, when the first pressure relief mechanism is actuated, emissions released by the first pressure relief mechanism are unlikely to affect the second battery cell. Similarly, because the orientation of the second pressure relief mechanism is disposed at an angle to the first direction, when the second pressure relief mechanism is actuated, emissions released by the second pressure relief mechanism are unlikely to affect the first battery cell, which can reduce the risk of thermal propagation when the battery cell experiences thermal runaway, so that the battery has high reliability.

The battery disclosed in the embodiments of the present application may be, but is not limited to, used in an electric device such as a vehicle, a ship, or an aircraft. The battery disclosed in the present application may be used to form a power source system of the electric device.

An embodiment of the present application provides an electric apparatus using a battery as a power source, where the electric device apparatus may be, but is not limited to, a mobile phone, a tablet computer, a notebook computer, an electric toy, an electric tool, an electric bicycle, an electric motorcycle, an electric vehicle, a ship, a spacecraft, and the like. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

For ease of description, the following embodiments are described by using an example in which an electric device in an embodiment of this application is a vehicle.

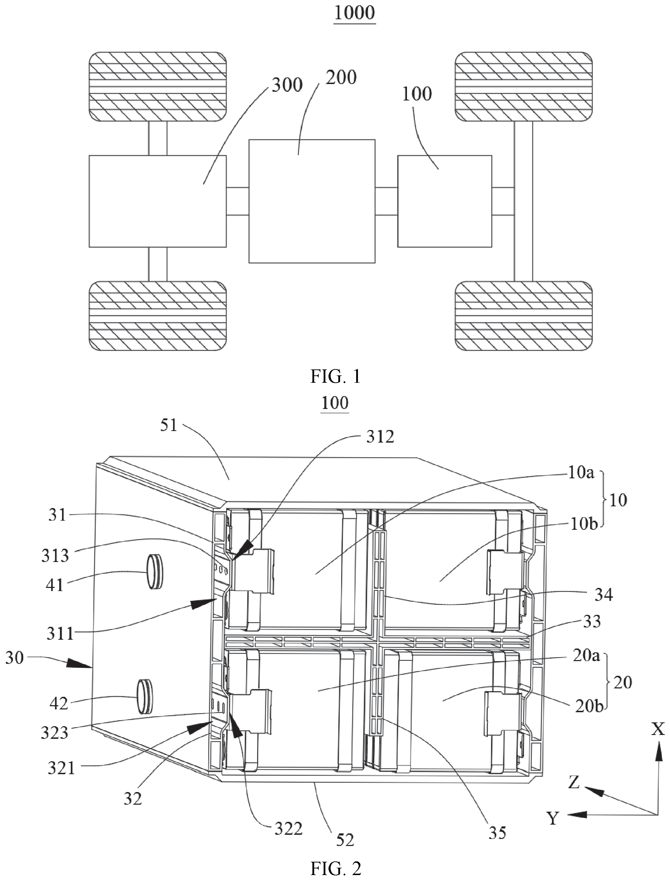

Referring to FIG. 1, FIG. 1 is a schematic structural diagram of a vehicle provided in some embodiments of the present application. The vehicle 1000 may be a fuel vehicle, a gas vehicle, or a new energy vehicle, and the new energy vehicle may be a battery electric vehicle, a hybrid vehicle, or a range-extended electric vehicle. A battery 100 is arranged inside the vehicle 1000. The battery 100 may be arranged at a bottom, head, or tail of the vehicle 1000. The battery 100 may be used for supplying power to the vehicle 1000, for example, the battery 100 may be used as an operating power source for the vehicle 1000, and used for a circuitry of the vehicle 1000, for example, used for operating power requirements for starting, navigation, and running of the vehicle 1000.

The vehicle 1000 may further include a controller 200 and a motor 300, where the controller 200 is configured to control the battery 100 to power the motor 300, for example, for a working power requirement of the vehicle 1000 during starting, navigating, and driving.

In some embodiments of the present application, the battery 100 may be used not only as the operating power source of the vehicle 1000, but also as a driving power source of the vehicle 1000, instead of or partially instead of fuel or natural gas to provide driving power for the vehicle 1000.

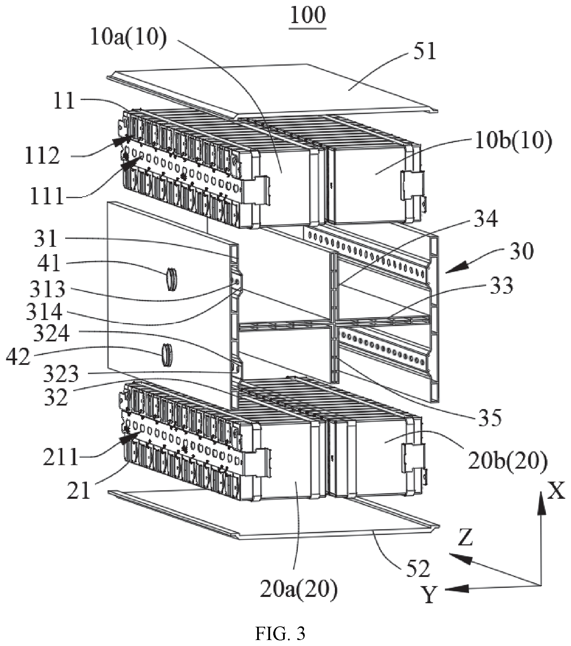

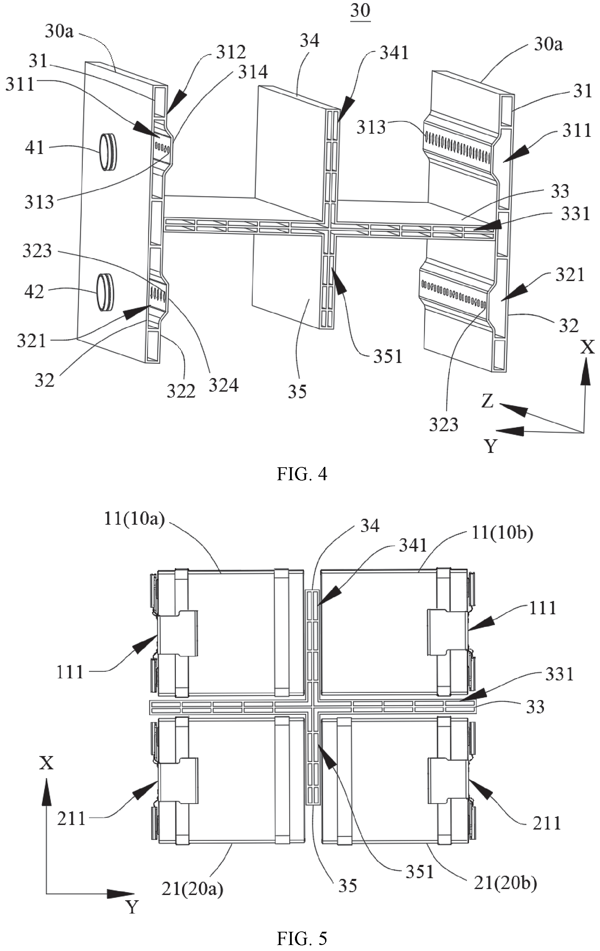

Referring to FIG. 2, FIG. 2 is a cross-sectional view of a battery according to some embodiments of the present application, FIG. 3 is a schematic exploded view of some structures according to some embodiments of the present application, and FIG. 4 is a schematic diagram of a structure of a box body according to some embodiments of the present application. Embodiments of the present application provide a battery 100, where the battery 100 includes a first layer of battery cells 10 and a second layer of battery cells 20. The first layer of battery cells 10 and the second layer of battery cells 20 are stacked in a first direction X. The first layer of battery cells 10 includes a plurality of first battery cells 11, and each first battery cell 11 is provided with a first pressure relief mechanism 111; and the second layer of battery cells 20 includes a plurality of second battery cells 21, and each second battery cell 21 is provided with a second pressure relief mechanism 211. The orientation of the first pressure relief mechanism 111 and the orientation of the second pressure relief mechanism 211 are each disposed at an angle to the first direction X.

The first layer of battery cells 10 and the second layer of battery cells 20 are stacked in the first direction X, which may be that the first layer of battery cells 10 and the second layer of battery cells 20 are stacked in the direction of gravity. The first direction X may be parallel to the direction of gravity, or the first direction X may form an included angle with the direction of gravity. In some embodiments, when the first layer of battery cells 10 and the second layer of battery cells 20 are stacked in the direction of gravity, space inside the battery 100 in the direction of gravity can be properly used.

The first direction X is bidirectional, and an example in which the first direction X is parallel to the direction of gravity is used for description. The first layer of battery cells 10 and the second layer of battery cells 20 are stacked in the first direction X, which may be that the first layer of battery cells 10 is located above the second layer of battery cells 20, or the second layer of battery cells 20 is located above the first layer of battery cells 10.

The orientation of the first pressure relief mechanism 111 is unidirectional, and the orientation of the first pressure relief mechanism 111 may be understood as a direction perpendicular to a plane in which the first pressure relief mechanism 111 is located. The orientation of the second pressure relief mechanism 211 is unidirectional, and the orientation of the second pressure relief mechanism 211 may be understood as a direction perpendicular to a plane in which the second pressure relief mechanism 211 is located.

The orientation of the first pressure relief mechanism 111 is disposed at an angle to the first direction X. The orientation of the first pressure relief mechanism 111 is not parallel to the first direction X. The orientation of the first pressure relief mechanism 111 is obliquely disposed relative to the first direction X. When the first pressure relief mechanism 111 releases the emissions, the emissions are unlikely to affect the second battery cell 21. The orientation of the second pressure relief mechanism 211 is disposed at an angle to the first direction X. The orientation of the second pressure relief mechanism 211 is not parallel to the first direction X. The orientation of the second pressure relief mechanism 211 is obliquely disposed relative to the first direction X. When the second pressure relief mechanism 211 releases the emissions, the emissions are unlikely to affect the first battery cell 11.

A plurality of first battery cells 11 may be connected in series, in parallel, or in a combination of both, and "in a combination of both" means that the plurality of first battery cells 11 are connected both in series and in parallel.

A plurality of second battery cells 21 may be connected in series, in parallel, or in a combination of both, and "in a combination of both" means that the plurality of second battery cells 21 are connected both in series and in parallel.

The first battery cell 11 and the second battery cell 21 each may be a secondary battery 100 or a primary battery 100. The first battery cell 11 and the second battery cell 21 each may alternatively be a lithium-sulfur battery 100, a sodium-ion battery 100, or a magnesium-ion battery 100, but is not limited thereto.

In some embodiments, the first battery cell 11 includes a first electrode terminal, the first electrode terminal and the first pressure relief mechanism 111 may be disposed at the same end of the first battery cell 11, or the first electrode terminal and the first pressure relief mechanism 111 may be disposed at two different ends of the first battery cell 11, for example, two adjacent ends or two opposite ends.

In some embodiments, the second battery cell 21 includes a second electrode terminal, the second electrode terminal and the second pressure relief mechanism 211 may be disposed at the same end of the second battery cell 21, or the second electrode terminal and the second pressure relief mechanism 211 may be disposed at two different ends of the second battery cell 21, for example, two adjacent ends or two opposite ends.

A structure of the first battery cell 11 may be the same as or different from a structure of the second battery cell 21.

The battery 100 further includes a first busbar member and a second busbar member, the first busbar member is configured to implement electrical connection between two first battery cells 11, and the second busbar member is configured to implement electrical connection between two second battery cells 21.

In some embodiments, the battery 100 further includes a box body, the first layer of battery cells 10 and the second layer of battery cells 20 are both disposed in the box body, and the first pressure relief mechanism 111 and the second pressure relief mechanism 211 may be directed toward a wall portion at the same end of the box body in a second direction Y, for example, the orientation of the first pressure relief mechanism 111 may be the same as the orientation of the second pressure relief mechanism 211. The first pressure relief mechanism 111 and the second pressure relief mechanism 211 may be directed toward wall portions at two opposite ends of the box body in the second direction Y, for example, the orientation of the first pressure relief mechanism 111 may be opposite to the orientation of the second pressure relief mechanism 211.

According to the battery 100 in the embodiments of the present application, the first layer of battery cells 10 and the second layer of battery cells 20 are stacked in the first direction X, which can improve a space utilization rate inside the battery 100 in the first direction X, thereby facilitating improvement of energy density of the battery 100. The orientation of the first pressure relief mechanism 111 and the orientation of the second pressure relief mechanism 211 are each disposed at an angle to the first direction, so that when the first pressure relief mechanism 111 is actuated or the second pressure relief mechanism 211 is actuated, the emissions discharged by the first pressure relief mechanism 111 are unlikely to affect the second battery cell 21, or the emissions discharged by the second pressure relief mechanism 211 are unlikely to affect the first battery cell 11. This can reduce the risk of thermal propagation when the battery 100 cell experiences thermal runaway, so that the battery 100 has high reliability.

According to some embodiments of the present application, the first pressure relief mechanism 111 is disposed at one end of the first battery cell 11 in the second direction Y; and the second pressure relief mechanism 211 is disposed at one end of the second battery cell 21 in the second direction Y, and the second direction Y is perpendicular to the first direction X.

The second direction Y is bidirectional, and "the first pressure relief mechanism 111 is disposed at one end of the first battery cell 11 in the second direction Y" means that the first pressure relief mechanism 111 is disposed at one end in two opposite ends of the first battery cell 11 in the second direction Y. For example, the second direction Y is a left-right horizontal direction, the first pressure relief mechanism 111 may be disposed at the left end of the first battery cell 11 in the second direction Y, or the first pressure relief mechanism 111 may be disposed at the right end of the first battery cell 11 in the second direction Y. Similarly, the second pressure relief mechanism 211 is disposed at one end in two opposite ends of the second battery cell 21 in the second direction Y.

The second direction Y is perpendicular to the first direction X. The first pressure relief mechanism 111 is not disposed toward the second battery cell 21, and the second pressure relief mechanism 211 is not disposed toward the first battery cell 11. When the first pressure relief mechanism 111 is actuated to release the emissions, the emissions are unlikely to be sprayed toward the second battery cell 21. In addition, when the second pressure relief mechanism 211 is actuated to release the emissions, the emissions are unlikely to be sprayed toward the first battery cell 11.

In the foregoing solution, the first pressure relief mechanism 111 is disposed at one end of the first battery cell 11 in the second direction Y, and the emissions released when the first pressure relief mechanism 111 is actuated are unlikely to be directed toward the second battery cell 21, thereby reducing impact of the emissions on the second battery cell 21, and reducing the risk of thermal propagation when the battery cell experiences thermal runaway. The second pressure relief mechanism 211 is disposed at one end of the second battery cell 21 in the second direction Y, and the emissions released when the second pressure relief mechanism 211 is actuated are unlikely to be directed toward the first battery cell 11, thereby reducing impact of the emissions on the first battery cell 11, and reducing the risk of thermal propagation when the battery cell experiences thermal runaway.

According to some embodiments of the present application, the orientation of the first pressure relief mechanism 111 and the orientation of the second pressure relief mechanism 211 are both parallel to the second direction Y.

The orientation of the first pressure relief mechanism 111 is parallel to the second direction Y, that is, the orientation of the first pressure relief mechanism 111 is perpendicular to the first direction X, and the emissions released when the first pressure relief mechanism 111 is actuated can be sprayed in the second direction Y, and the emissions are unlikely to be sprayed toward the second battery cell 21.

The orientation of the second pressure relief mechanism 211 is parallel to the second direction Y, that is, the orientation of the second pressure relief mechanism 211 is perpendicular to the first direction X, and the emissions released when the second pressure relief mechanism 211 is actuated can be sprayed in the second direction Y, and the emissions are unlikely to be sprayed toward the first battery cell 11.

In the foregoing solution, the orientation of the first pressure relief mechanism 111 is perpendicular to the first direction X, and the emissions released when the first pressure relief mechanism 111 is actuated are unlikely to affect the second battery cell 21, thereby reducing impact of the emissions on the second battery cell 21, reducing the risk of thermal propagation, and improving reliability of the battery 100. The orientation of the second pressure relief mechanism 211 is perpendicular to the first direction X, and the emissions released when the second pressure relief mechanism 211 is actuated are unlikely to affect the first battery cell 11, thereby reducing impact of the emissions on the first battery cell 11, reducing the risk of thermal propagation, and improving reliability of the battery 100.

Referring to FIG. 2 to FIG. 4, according to some embodiments of the present application, the battery 100 further includes a box body 30, and the first layer of battery cells 10 and the second layer of battery cells 20 are disposed in the box body 30. The box body 30 includes a first wall portion 31, the first wall portion 31 is disposed opposite to the first pressure relief mechanism 111 in the second direction Y, a first collection cavity 311 is formed inside the first wall portion 31, and the first collection cavity 311 is configured to collect emissions of the first battery cell 11 when the first pressure relief mechanism 111 is actuated.

The first wall portion 31 is of a hollow structure, so that the first collection cavity 311 is formed inside the first wall portion 31, which can not only collect the emissions released when the first pressure relief mechanism 111 is actuated, but also reduce the weight of the box body 30.

In the second direction Y, the first wall portion 31 is disposed opposite to the first pressure relief mechanism 111, and when the first pressure relief mechanism 111 is actuated, the emissions released by the first pressure relief mechanism 111 are sprayed toward the first wall portion 31. The first wall portion 31 may be provided with a weakened portion (such as a notch or a thinned region), and when the first pressure relief mechanism 111 is actuated, the emissions released by the first pressure relief mechanism 111 can damage the weakened portion and enter the first collection cavity 311.

In the foregoing solution, the first wall portion 31 is disposed opposite to the first pressure relief mechanism 111, and when the first pressure relief mechanism 111 is actuated, the emissions discharged by the first pressure relief mechanism 111 can be collected by the first collection cavity 311, thereby reducing impact of the emissions on another battery 100 cell.

Referring to FIG. 3 and FIG. 4, according to some embodiments of the present application, the battery 100 further includes a third pressure relief mechanism 41. The third pressure relief mechanism 41 is disposed on the first wall portion 31, and the third pressure relief mechanism 41 is configured to release the emissions in the first collection cavity 311.

In some embodiments, the third pressure relief mechanism 41 is disposed on the outer side of the first wall portion 31, and the outer side of the first wall portion 31 is the side of the first wall portion 31 facing away from the first layer of battery cells 10, so that the third pressure relief mechanism 41 releases emissions when being actuated.

In the foregoing solution, configuration of the third pressure relief mechanism 41 allows for release of the emissions in the first collection cavity 311, thereby reducing internal pressure of the first collection cavity 311, and improving reliability of the battery 100.

Referring to FIG. 3 and FIG. 4, according to some embodiments of the present application, the first wall portion 31 has a first surface 312 facing the first layer of battery cells 10. The first surface 312 is provided with a first through hole 313, the first through hole 313 is in communication with the first collection cavity 311, and the first through hole 313 is disposed corresponding to the first pressure relief mechanism 111.

The first wall portion 31 and other wall portions enclose space for accommodating the first layer of battery cells 10, the first through hole 313 is in communication with the first collection cavity 311 and the space. When the first pressure relief mechanism 111 releases the emissions, the emissions can enter the first collection cavity 311 through the first through hole 313 to be collected by the first collection cavity 311.

The first through hole 313 may be disposed corresponding to one first pressure relief mechanism 111, or the first through hole 313 may be disposed corresponding to a plurality of first pressure relief mechanisms 111. For example, there may be a plurality of first through holes 313, and each first through hole 313 is disposed corresponding to one first pressure relief mechanism 111; or there is one first through hole 313, and the one first through hole 313 corresponds to a plurality of first pressure relief mechanisms 111.

In some embodiments, one first pressure relief mechanism 111 corresponds to one first through hole 313 to reduce a risk of thermal runaway diffusion, so that the battery 100 has high reliability.

In some embodiments, when the first electrode terminal 112 of the first battery cell 11 is disposed toward the first surface 312, a first protruding portion 314 can be formed on the first surface 312, and the first through hole 313 is disposed on the first protruding portion 314, thereby making space in the second direction Y properly used.

In the foregoing solution, configuration of the first through hole 313 allows the emissions released by the first pressure relief mechanism 111 to enter the first collection cavity 311, thereby further reducing impact of the emissions on another battery 100 cell.

Referring to FIG. 3 and FIG. 4, according to some embodiments of the present application, the box body 30 further includes a second wall portion 32, the second wall portion 32 is disposed opposite to the second pressure relief mechanism 211 in the second direction Y, a second collection cavity 321 is formed inside the second wall portion 32, and the second collection cavity 321 is configured to collect emissions of the second battery cell 21 when the second pressure relief mechanism 211 is actuated.

In some embodiments, the second wall portion 32 and the first wall portion 31 may be located at two ends of the box body 30 in the second direction Y.

The second wall portion 32 is of a hollow structure, so that the second collection cavity 321 is formed inside the second wall portion 32, which can not only collect the emissions released when the second pressure relief mechanism 211 is actuated, but also reduce the weight of the box body 30.

In the second direction Y, the second wall portion 32 is disposed opposite to the second pressure relief mechanism 211, and when the second pressure relief mechanism 211 is actuated, the emissions released by the second pressure relief mechanism 211 are sprayed toward the second wall portion 32. The second wall portion 32 may be provided with a weakened portion (such as a notch or a thinned region), and when the second pressure relief mechanism 211 is actuated, the emissions released by the second pressure relief mechanism 211 can damage the weakened portion and enter the second collection cavity 321.

In the foregoing solution, the second wall portion 32 is disposed opposite to the second pressure relief mechanism 211, and when the second pressure relief mechanism 211 is actuated, the emissions discharged by the second pressure relief mechanism 211 can be collected by the second collection cavity 321, thereby reducing impact of the emissions on another battery 100 cell.

In some embodiments, the second wall portion 32 and the first wall portion 31 are located at the same end of the box body 30 in the second direction Y, and the second wall portion 32 is connected to the first wall.

According to some embodiments of the present application, the second wall portion 32 is integrally formed with the first wall portion 31.

The second wall portion 32 and the first wall portion 31 may be integrally extruded or injection molded.

In the foregoing solution, the second wall portion 32 is integrally formed with the first wall portion 31, which facilitates processing and manufacturing.

Referring to FIG. 3 and FIG. 4, according to some embodiments of the present application, the battery 100 further includes a fourth pressure relief mechanism 42. The fourth pressure relief mechanism 42 is disposed on the second wall portion 32, and the fourth pressure relief mechanism 42 is configured to release the emissions in the second collection cavity 321.

In some embodiments, the fourth pressure relief mechanism 42 is disposed on the outer side of the second wall portion 32, and the outer side of the second wall portion 32 is the side of the second wall portion 32 facing away from the second layer of battery cells 20, so that the fourth pressure relief mechanism 42 releases emissions when being actuated.

In the foregoing solution, configuration of the fourth pressure relief mechanism 42 allows for release of the emissions in the second collection cavity 321, thereby reducing internal pressure of the second collection cavity 321, and improving reliability of the battery 100.

Referring to FIG. 3 and FIG. 4, according to some embodiments of the present application, the second wall portion 32 has a second surface 322 facing the second layer of battery cells 20. The second surface 322 is provided with a second through hole 323, the second through hole 323 is in communication with the second collection cavity 321, and the second through hole 323 is disposed corresponding to the second pressure relief mechanism 211.

The second wall portion 32 and other wall portions enclose space for accommodating the second layer of battery cells 20, the second through hole 323 is in communication with the second collection cavity 321 and the space. When the second pressure relief mechanism 211 releases the emissions, the emissions can enter the second collection cavity 321 through the second through hole 323 to be collected by the second collection cavity 321.

The second through hole 323 may be disposed corresponding to one second pressure relief mechanism 211, or the second through hole 323 may be disposed corresponding to a plurality of second pressure relief mechanisms 211. For example, there may be a plurality of second through holes 323, and each second through hole 323 is disposed corresponding to one second pressure relief mechanism 211; or there is one second through hole 323, and the one second through hole 323 is disposed corresponding to a plurality of second pressure relief mechanisms 211.

In some embodiments, one second pressure relief mechanism 211 corresponds to one second through hole 323 to reduce a risk of thermal runaway diffusion, so that the battery 100 has high reliability.

In some embodiments, when the second electrode terminal of the second battery cell 21 is disposed toward the second surface 322, a second protruding portion 324 can be formed on the second surface 322, and the second through hole 323 is disposed on the second protruding portion 324, thereby making the space in the second direction properly used.

In the foregoing solution, configuration of the second through hole 323 allows the emissions released by the second pressure relief mechanism 211 to enter the second collection cavity 321, thereby further reducing impact of the emissions on another battery 100 cell.

Referring to FIG. 3 and FIG. 4, and further referring to FIG. 5, FIG. 5 is a schematic diagram of assembly between a first layer of battery cells and an isolation component and between a second layer of battery cells and the isolation component according to some embodiments of the present application. According to some embodiments of the present application, the battery 100 further includes a box body 30, and the first layer of battery cells 10 and the second layer of battery cells 20 are disposed in the box body 30. The box body 30 includes an isolation component 33, the isolation component 33 is located between the first layer of battery cells 10 and the second layer of battery cells 20 in the first direction X, the first layer of battery cells 10 is connected to the isolation component 33, the second layer of battery cells 20 is connected to the isolation component 33, and the isolation component 33 carries the first layer of battery cells 10 and the second layer of battery cells 20.

The box body 30 has accommodating space, and the first layer of battery cells 10 and the second layer of battery cells 20 are both accommodated in the accommodating space.

The isolation component 33 is a component configured to isolate the first layer of battery cells 10 and the second layer of battery cells 20 in the first direction X. The isolation component 33 can divide the accommodating space inside the box body 30 into two cavities, and the first layer of battery cells 10 and the second layer of battery cells 20 are respectively located in the two cavities.

In some embodiments, the isolation component 33 can isolate the first layer of battery cells 10 and the second layer of battery cells 20 into two cavities independent of each other, thereby reducing impact of the emissions released by the first pressure relief mechanisms 111 of the first layer of battery cells 10 on the second layer of battery cells 20, or reducing impact of the emissions released by the second pressure relief mechanisms 211 of the second layer of battery cells 20 on the first layer of battery cells 10.

That "the isolation component 33 carries the first layer of battery cells 10 and the second layer of battery cells 20" means that gravity of the first layer of battery cells 10 and gravity of the second layer of battery cells 20 are both applied to the isolation component 33.

The isolation component 33 may be made of various materials, for example, copper, iron, aluminum, steel, an aluminum alloy, plastic, or the like.

In the foregoing solution, configuration of the isolation component 33 can separate the first layer of battery cells 10 from the second layer of battery cells 20; and the isolation component 33 carries the first layer of battery cells 10 and the second layer of battery cells 20, gravity of the first layer of battery cells 10 and gravity of the second layer of battery cells 20 are both applied to the isolation component 33, and the isolation component 33 provides an acting force to overcome gravity for both the first layer of battery cells 10 and the second layer of battery cells 20.

Referring to FIG. 5, according to some embodiments of the present application, a first flow channel 331 for accommodating a heat exchange medium is formed inside the isolation component 33.

The heat exchange medium may be a cooling medium or a cooling fluid, and the heat exchange medium may be water, a mixture liquid of water and ethylene glycol, air, or the like. The heat exchange medium can adjust temperature, for example, can heat or cool the battery 100 cell.

In some embodiments, the heat exchange medium in the first flow channel 331 may be circulating to achieve a better temperature adjustment effect. For example, the first flow channel 331 may be provided with two openings, with one opening being a heat exchange medium inlet and the other opening being a heat exchange medium outlet, and the two openings are separately connected to an external heat exchange medium circulation system, thereby realizing circulation of the heat exchange medium in the first flow channel 331.

The isolation component 33 may be of a hollow structure, so as to form the first flow channel 331 inside the isolation component 33.

In the foregoing solution, configuration of the first flow channel 331, and the first layer of battery cells 10 and the second layer of battery cells 20 sharing a thermal management component, can adjust temperatures of the first layer of battery cells 10 and the second layer of battery cells 20, thereby facilitating improvement of reliability of the battery 100.

Referring to FIG. 2, FIG. 3, and FIG. 5, according to some embodiments of the present application, the first layer of battery cells 10 includes a first battery cell group 10a and a second battery cell group 10b that are arranged at intervals in the second direction Y, and the second direction Y is perpendicular to the first direction X. The box body 30 further includes a first partition piece 34, the first partition piece 34 is disposed on the isolation component 33, and the first partition piece 34 is disposed between the first battery cell group 10a and the second battery cell group 10b in the second direction Y.

The first battery cell group 10a and the second battery cell group 10b may each include a plurality of first battery cells 11. In the first battery cell group 10a, the plurality of first battery cells 11 may be stacked in a third direction, and the third direction, the second direction Y, and the first direction X are perpendicular to each other. In the second battery cell group 10b, the plurality of second battery cells 21 may be stacked in the third direction.

The first partition piece 34 is a component configured to separate the first battery cell group 10a and the second battery cell group 10b in the second direction Y.

The first partition piece 34 is connected to the isolation component 33, for example, the first partition piece 34 and the isolation component 33 are bonded, welded, integrally formed, or the like.

In the foregoing solution, configuration of the first partition piece 34 can improve installation stability of the first battery cell group 10a and the second battery cell group 10b.

Referring to FIG. 5, according to some embodiments of the present application, in the second direction Y, the first pressure relief mechanism 111 of the first battery cell group 10a is disposed on the side of the first battery cell group 10a facing away from the second battery cell group 10b, and the first pressure relief mechanism 111 of the second battery cell group 10b is disposed on the side of the second battery cell group 10b facing away from the first battery cell group 10a.

A releasing direction of the first pressure relief mechanism 111 of the first battery cell group 10a is opposite to a releasing direction of the first pressure relief mechanism 111 of the second battery cell group 10b.

In the foregoing solution, the first pressure relief mechanism 111 of the first battery cell group 10a and the first pressure relief mechanism 111 of the second battery cell group 10b are disposed facing away from each other in the second direction Y, which can reduce impact of pressure relief of the first pressure relief mechanism 111 of the first battery cell group 10a on the second battery cell group 10b, and reduce impact of pressure relief of the first pressure relief mechanism 111 of the second battery cell group 10b on the first battery cell group 10a.

According to some embodiments of the present application, the first battery cell group 10a and the second battery cell group 10b are each connected to the first partition piece 34.

A connection manner between the first battery cell group 10a and the first partition piece 34 may be bonding, welding, or the like. A connection manner between the second battery cell group 10b and the first partition piece 34 may be bonding, welding, or the like.

In the foregoing solution, gravity of the first battery cell group 10a and gravity of the second battery cell group 10b are both applied to the first partition piece 34, and the first partition piece 34 provides an acting force to overcome gravity for both the first battery cell group 10a and the second battery cell group 10b.

Referring to FIG. 4 and FIG. 5, according to some embodiments of the present application, a second flow channel 341 for accommodating a heat exchange medium is formed inside the first partition piece 34.

The heat exchange medium in the second flow channel 341 may be the same as the heat exchange medium in the first flow channel 331.

The heat exchange medium located in the second flow channel 341 may be circulating to achieve a better temperature adjustment effect. For example, the second flow channel 341 may be provided with two openings, with one opening being a heat exchange medium inlet and the other opening being a heat exchange medium outlet, and the two openings are separately connected to an external heat exchange medium circulation system, so that the heat exchange medium circulates in the second flow channel 341.

In some embodiments, the second flow channel 341 may be in communication with the first flow channel 331.

In the foregoing solution, configuration of the second flow channel 341, and the first battery cell group 10a and the second battery cell group 10b sharing a thermal management component, can adjust temperatures of the first battery cell group 10a and the second battery cell group 10b, thereby facilitating improvement of reliability of the battery 100.

According to some embodiments of the present application, the first partition piece 34 is integrally formed with or welded to the isolation component 33.

The first partition piece 34 and the isolation component 33 may be integrally extruded or injection molded.

In the foregoing solution, the first partition piece 34 is integrally formed with the isolation component 33, which can improve structural strength. The first partition piece 34 is welded to the isolation component 33, which makes it less difficult to manufacture.

Referring to FIG. 4, according to some embodiments of the present application, the box body 30 further includes two first wall portions 31 disposed opposite to each other in the second direction Y, the second direction Y is perpendicular to the first direction X, the first layer of battery cells 10 is disposed between the two first wall portions 31, and the isolation component 33 is connected to the two first wall portions 31.

The two first wall portions 31 are disposed opposite to each other in the second direction Y. The two first wall portions 31 and the isolation component 33 enclose space for accommodating the first layer of battery cells 10. An opening is formed at the end of the first wall portion 31 away from the isolation component 33 in the first direction X, so that the first layer of battery cells 10 enters the space.

In the foregoing solution, the first layer of battery cells 10 is disposed between the two first wall portions 31, and the two first wall portions 31 can protect the first layer of battery cells 10. The isolation component 33 is connected to the two first wall portions 31, which can improve assembly strength.

According to some embodiments of the present application, the isolation component 33 is integrally formed with or welded to the two first wall portions 31.

The isolation component 33 and the two first wall portions 31 may be integrally extruded or injection molded.

In the foregoing solution, the isolation component 33 is integrally formed with the two first wall portions 31, resulting in high connection strength between the isolation component 33 and the two first wall portions 31, which helps improve structural stability of the battery 100. The isolation component 33 is welded to the two first wall portions 31, which makes it less difficult to manufacture.

Referring to FIG. 2 and FIG. 3, according to some embodiments of the present application, the battery 100 further includes a first cover body 51, the first cover body 51 is connected to the two first wall portions 31, and the first layer of battery cells 10 is located between the first cover body 51 and the isolation component 33 in the first direction X.

The first cover body 51 may be configured as a cover structure with one side open, or may be configured as a flat plate.

The first cover body 51, the two first wall portions 31, and the isolation component 33 enclose space for accommodating the first layer of battery cells 10, and the first cover body 51 can protect the first layer of battery cells 10.

In the foregoing solution, the first cover body 51 is connected to the two first wall portions 31 to form accommodating space for accommodating the first layer of battery cells 10. In addition, the first layer of battery cells 10 can be assembled and maintained by disassembling the first cover body 51, which helps improve assembly efficiency and reduce maintenance costs.

Referring to FIG. 3 and FIG. 5, according to some embodiments of the present application, the second layer of battery cells 20 includes a third battery cell group 20a and a fourth battery cell group 20b that are arranged at intervals in the second direction Y, and the second direction Y is perpendicular to the first direction X; and the battery 100 further includes a second partition piece 35, the second partition piece 35 is disposed on the isolation component 33, and the second partition piece 35 is disposed between the third battery cell group 20a and the fourth battery cell group 20b in the second direction Y.

The third battery cell group 20a and the fourth battery cell group 20b may each include a plurality of second battery cells 21. In the third battery cell group 20a, the plurality of second battery cells 21 may be stacked in a third direction. In the fourth battery cell group 20b, the plurality of second battery cells 21 may be stacked in the third direction.

The second partition piece 35 is a component configured to separate the third battery cell group 20a and the fourth battery cell group 20b in the second direction Y.

The first partition piece 34 is connected to the isolation component 33, for example, the first partition piece 34 and the isolation component 33 are bonded, welded, integrally formed, or the like.

In the foregoing solution, configuration of the second partition piece 35 can improve installation stability of the third battery cell group 20a and the fourth battery cell group 20b.

Referring to FIG. 5, according to some embodiments of the present application, in the second direction Y, the second pressure relief mechanism 211 of the third battery cell group 20a is disposed on the side of the third battery cell group 20a facing away from the fourth battery cell group 20b, and the second pressure relief mechanism 211 of the fourth battery cell group 20b is disposed on the side of the fourth battery cell group 20b facing away from the third battery cell group 20a.

A releasing direction of the second pressure relief mechanism 211 of the third battery cell group 20a is opposite to a releasing direction of the second pressure relief mechanism 211 of the fourth battery cell group 20b.

In the foregoing solution, the second pressure relief mechanism 211 of the third battery cell group 20a and the second pressure relief mechanism 211 of the fourth battery cell group 20b are disposed facing away from each other in the second direction Y, which can reduce impact of pressure relief of the second pressure relief mechanism 211 of the third battery cell group 20a on the fourth battery cell group 20b, and reduce impact of pressure relief of the second pressure relief mechanism 211 of the fourth battery cell group 20b on the third battery cell group 20a.

According to some embodiments of the present application, the third battery cell group 20a and the fourth battery cell group 20b are each connected to the second partition piece 35.

A connection manner between the third battery cell group 20a and the second partition piece 35 may be bonding, welding, or the like. A connection manner between the fourth battery cell group 20b and the second partition piece 35 may be bonding, welding, or the like.

The second partition piece 35 can carry the third battery cell group 20a and the fourth battery cell group 20b.

In the foregoing solution, gravity of the third battery cell group 20a and gravity of the fourth battery cell group 20b are both applied to the second partition piece 35, and the second partition piece 35 provides an acting force to overcome gravity for both the third battery cell group 20a and the fourth battery cell group 20b.

Referring to FIG. 4 and FIG. 5, according to some embodiments of the present application, a third flow channel 351 for accommodating a heat exchange medium is formed inside the second partition piece 35.

The heat exchange medium in the third flow channel 351 may be the same as the heat exchange medium in the first flow channel 331.

The heat exchange medium located in the third flow channel 351 may be circulating to achieve a better temperature adjustment effect. For example, the third flow channel 351 may be provided with two openings, with one opening being a heat exchange medium inlet and the other opening being a heat exchange medium outlet, and the two openings are separately connected to an external heat exchange medium circulation system, so that the heat exchange medium circulates in the third flow channel 351.

In some embodiments, the third flow channel 351 may be in communication with the first flow channel 331.

In the foregoing solution, configuration of the third flow channel 351, and the third battery cell group 20a and the fourth battery cell group 20b sharing a thermal management component, can adjust temperatures of the third battery cell group 20a and the fourth battery cell group 20b, thereby facilitating improvement of reliability of the battery 100.

According to some embodiments of the present application, the second partition piece 35 is integrally formed with or welded to the isolation component 33.

The second partition piece 35 and the isolation component 33 may be integrally extruded or injection molded.

In the foregoing solution, the second partition piece 35 is integrally formed with the isolation component 33, which can improve structural strength. The second partition piece 35 is welded to the isolation component 33, which makes it less difficult to manufacture.

Referring to FIG. 3 and FIG. 4, according to some embodiments of the present application, the box body 30 further includes two second wall portions 32 disposed opposite to each other in the second direction Y, the second layer of battery cells 20 is disposed between the two second wall portions 32, and the isolation component 33 is connected to the two second wall portions 32.

The two second wall portions 32 are disposed opposite to each other in the second direction Y. The two second wall portions 32 and the isolation component 33 enclose space for accommodating the second layer of battery cells 20. An opening is formed at the end of the second wall portion 32 away from the isolation component 33 in the first direction X, so that the second layer of battery cells 20 enters the space.

In some embodiments, the isolation component 33 is located at the end of the first wall portion 31 close to the second wall portion 32, and the isolation component 33 is located at the end of the second wall portion 32 close to the first wall portion 31, that is, the isolation component 33 is connected to both the first wall portion 31 and second wall portion 32 that are adjacent.

In the foregoing solution, the second layer of battery cells 20 is disposed between the two second wall portions 32, and the two second wall portions 32 can protect the second layer of battery cells 20. The isolation component 33 is connected to the two second wall portions 32, which can improve assembly strength.

According to some embodiments of the present application, the isolation component 33 is integrally formed with or welded to the two second wall portions 32.

The isolation component 33 and the two second wall portions 32 may be integrally extruded or injection molded.

In the foregoing solution, the isolation component 33 is integrally formed with the two second wall portions 32, resulting in high connection strength between the isolation component 33 and the two second wall portions 32, which helps improve structural stability of the battery 100. The isolation component 33 is welded to the two second wall portions 32, which makes it less difficult to manufacture.

Referring to FIG. 2 and FIG. 3, according to some embodiments of the present application, the battery 100 further includes a second cover body 52, the second cover body 52 is connected to the two second wall portions 32, and the second layer of battery cells 20 is located between the second cover body 52 and the isolation component 33 in the first direction X.

The second cover body 52 may be configured as a cover structure with one side open, or may be configured as a flat plate.

The second cover body 52, the two second wall portions 32, and the isolation component 33 enclose space for accommodating the second layer of battery cells 20, and the second cover body 52 can protect the second layer of battery cells 20.

In the foregoing solution, the second cover body 52 is connected to the two second wall portions 32 to form accommodating space for accommodating the second layer of battery cells 20; and in addition, the second layer of battery cells 20 can be assembled and maintained by disassembling the second cover body 52, which helps improve assembly efficiency and reduce maintenance costs.

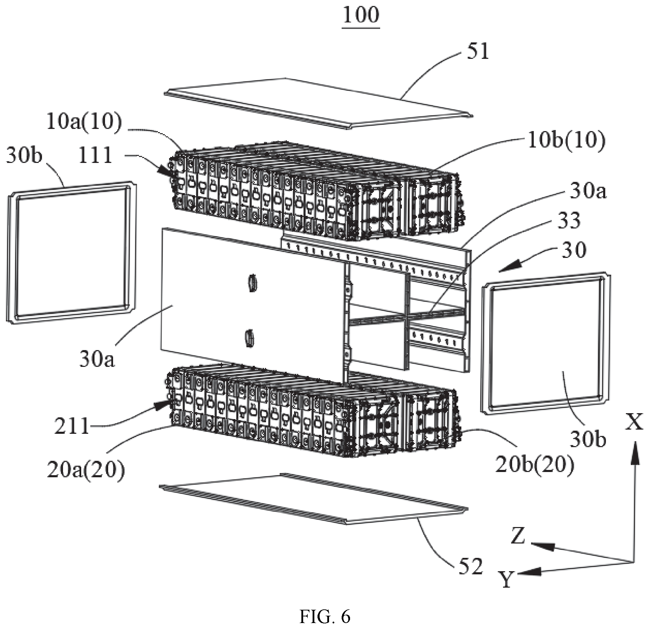

Referring to FIG. 6, FIG. 6 is a schematic exploded view of a structure of a battery according to some embodiments of the present application. According to some embodiments of the present application, the box body 30 includes two first side walls 30a and two second side walls 30b. The two first side walls 30a are disposed opposite to each other in the second direction Y, and the two second side walls 30b are disposed opposite to each other in a third direction Z. Two ends of the first side wall 30a in the third direction Z are respectively connected to the two second side walls 30b. The two first side walls 30a and the two second side walls 30b define accommodating space, and the accommodating space is used to accommodate the first layer of battery cells 10 and the second layer of battery cells 20. Each first side wall 30a includes a first wall portion 31 and a second wall portion 32. The first wall portion 31 and the second wall portion 32 are distributed in the first direction, the first wall portion 31 is disposed corresponding to the first layer of battery cells 10, and the second wall portion 32 is disposed corresponding to the second layer of battery cells 20. The isolation component 33 is connected to the two first side walls 30a and the two second side walls 30b. The first cover body 51 is connected to the two first wall portions 31 and the two second side walls 30b, and the isolation component 33, the first cover body 51, the two first wall portions 31, and the two second side walls 30b define space for accommodating the first layer of battery cells 10. The second cover body 52 is connected to the two second wall portions 32 and the two second side walls 30b, and the isolation component 33, the second cover body 52, the two second wall portions 32, and the two second side walls 30b define space for accommodating the second layer of battery cells 20.

The third direction Z is bidirectional, and the two second side walls 30b are disposed opposite to each other in the third direction Z. One second side wall 30b is connected to one end of the first side wall 30a in the third direction, and the other second side wall 30b is connected to the other end of the first side wall 30a in the third direction.

Configuration of the box body 30 can protect the first layer of battery cells 10 and the second layer of battery cells 20, thereby improving reliability of the battery 100.

According to some embodiments of the present application, the first direction X is parallel to the direction of gravity.

In the foregoing solution, the first layer of battery cells 10 and the second layer of battery cells 20 are stacked in the first direction X, which can make space in the direction of gravity properly used, thereby improving the space utilization rate.

In the foregoing embodiments, the pressure relief mechanism mentioned may be any of the possible pressure relief mechanisms, which is not limited in the embodiments of the present application. For example, the pressure relief mechanism may be a temperature-sensitive pressure relief mechanism, and the temperature-sensitive pressure relief mechanism is configured to be meltable when an internal temperature of a battery cell provided with the pressure relief mechanism reaches a threshold. For example, the pressure relief mechanism may be a pressure-sensitive pressure relief mechanism, and the pressure-sensitive pressure relief mechanism is configured to be breakable when an internal pressure of a battery cell provided with the pressure relief mechanism reaches a threshold.

According to some embodiments of this application, the embodiments of this application further provide an electric device, including the battery 100 provided in any of the foregoing embodiments.

The battery 100 is configured to provide electric energy.

The electric device may be any system or apparatus that uses the battery 100.

According to some embodiments of the present application, referring to FIG. 2 and FIG. 6, the embodiments of the present application provide a battery 100, including a first layer of battery cells 10 and a second layer of battery cells 20 that are stacked in a first direction X, and the first direction X is parallel to the direction of gravity.

The first layer of battery cells 10 includes a first battery cell group 10a and a second battery 100 cell group that are disposed at intervals in the second direction Y. The first battery cell group 10a includes a plurality of first battery cells 11 that are stacked in the third direction, and the second battery cell group 10b includes a plurality of first battery cells 11 that are stacked in the third direction. The second layer of battery cells 20 includes a third battery cell group 20a and a fourth battery cell group 20b that are disposed at intervals in the second direction Y. The third battery cell group 20a includes a plurality of second battery cells 21 that are stacked in the third direction, and the fourth battery cell group 20b includes a plurality of second battery cells 21 that are stacked in the third direction.

The first pressure relief mechanism 111 of the first battery cell group 10a is disposed facing away from the second battery cell group 10b, and the first pressure relief mechanism 111 of the second battery cell group 10b is disposed facing away from the first battery cell group 10a. The second pressure relief mechanism 211 of the third battery cell group 20a is disposed facing away from the fourth battery cell group 20b, and the second pressure relief mechanism 211 of the fourth battery cell group 20b is disposed facing away from the third battery cell group 20a.

The battery 100 further includes a box body 30, a first cover body 51, and a second cover body 52, and the box body 30 includes two first wall portions 31, two second wall portions 32, and an isolation component 33. The two first wall portions 31 are disposed opposite to each other in the second direction Y, the two second wall portions 32 are disposed opposite to each other in the second direction Y, and one first wall portion 31 and one second wall portion 32 are correspondingly and integrally formed. The isolation component 33 is connected to the two first wall portions 31 and the two second wall portions 32, the first cover body 51 is connected to the two first wall portions 31, the second cover body 52 is connected to the two second wall portions 32, and the first cover body 51, the isolation component 33, and the second cover body 52 are disposed at intervals in the first direction X. The first layer of battery cells 10 is disposed in space enclosed by the two first wall portions 31, the isolation component 33, and the first cover body 51, and the second layer of battery cells 20 is disposed in space enclosed by the two second wall portions 32, the isolation component 33, and the second cover body 52.

A first collection cavity 311 is formed inside the first wall portion 31, and the first wall portion 31 has a first surface 312 facing the first layer of battery cells 10. The first surface 312 is provided with a first through hole 313, the first through hole 313 is in communication with the first collection cavity 311, and the first through hole 313 is disposed corresponding to the first pressure relief mechanism 111. The battery 100 further includes a third pressure relief mechanism 41. The third pressure relief mechanism 41 is disposed on the first wall portion 31, and the third pressure relief mechanism 41 is configured to release emissions in the first collection cavity 311.

A second collection cavity 321 is formed inside the second wall portion 32, and the second wall portion 32 has a second surface 322 facing the second layer of battery cells 20. The second surface 322 is provided with a second through hole 323, the second through hole 323 is in communication with the second collection cavity 321, and the second through hole 323 is disposed corresponding to the second pressure relief mechanism 211. The battery 100 further includes a fourth pressure relief mechanism 42. The fourth pressure relief mechanism 42 is disposed on the second wall portion 32, and the fourth pressure relief mechanism 42 is configured to release the emissions in the second collection cavity 321.

The battery 100 further includes a first partition piece 34 and a second partition piece 35. The first partition piece 34 is disposed on the isolation component 33, and the first partition piece 34 is disposed between the first battery cell group 10a and the second battery cell group 10b in the second direction Y. The second partition piece 35 is disposed on the isolation component 33, and the second partition piece 35 is disposed between the third battery cell group 20a and the fourth battery cell group 20b in the second direction Y.

A first flow channel 331 for accommodating a heat exchange medium is formed inside the isolation component 33, a second flow channel 341 for accommodating a heat exchange medium is formed inside the first partition piece 34, and a third flow channel 351 for accommodating a heat exchange medium is formed inside the second partition piece 35.

According to the battery 100 in the embodiments of the present application, the first layer of battery cells 10 and the second layer of battery cells 20 share a heat exchange function of the isolation component 33, thereby improving a utilization rate of the isolation component 33. The first pressure relief mechanism 111 corresponds to the first through hole 313, and the second pressure relief mechanism 211 corresponds to the second through hole 323, which can reduce the risk of thermal runaway diffusion and improve reliability of the battery 100. The first battery cell group 10a is connected to the isolation component 33 and the first partition piece 34, the second battery cell group 10b is connected to the isolation component 33 and the first partition piece 34. The third battery 100 cell is connected to the isolation component 33 and the second partition piece 35, and the fourth battery cell group 20b is connected to the isolation component 33 and the second partition piece 35, so that each battery 100 cell group has good cooling efficiency to facilitate improvement of reliability of the battery 100.

Although the present application has been described with reference to some preferred embodiments, various modifications to this application and replacements of the components therein with equivalents can be made without departing from the scope of the present application. In particular, the technical features mentioned in the embodiments may be combined in any manner provided that no structural conflict is present. The present application is not limited to the specific embodiments disclosed herein, but includes all technical solutions falling within the scope of the claims.

## Claims

1. A battery, comprising a first layer of battery cells and a second layer of battery cells, wherein the first layer of battery cells and the second layer of battery cells are stacked in a first direction, wherein:
the first layer of battery cells comprises a plurality of first battery cells, and each first battery cell is provided with a first pressure relief mechanism; and
the second layer of battery cells comprises a plurality of second battery cells, and each second battery cell is provided with a second pressure relief mechanism,
wherein an orientation of the first pressure relief mechanism and an orientation of the second pressure relief mechanism are each arranged at an angle to the first direction.

2. The battery according to claim 1, wherein the first pressure relief mechanism is disposed at one end of the first battery cell in a second direction, and the second pressure relief mechanism is disposed at one end of the second battery cell in the second direction, wherein the second direction is perpendicular to the first direction.

3. The battery according to claim 2, wherein the orientation of the first pressure relief mechanism and the orientation of the second pressure relief mechanism are both parallel to the second direction.

4. The battery according to claim 2 or 3, wherein the battery further comprises a box body, the first layer of battery cells and the second layer of battery cells being disposed in the box body, wherein:
the box body comprises a first wall portion disposed opposite to the first pressure relief mechanism in the second direction, wherein a first collection cavity is formed inside the first wall portion, and the first collection cavity is configured to collect emissions of the first battery cell when the first pressure relief mechanism is actuated.

5. The battery according to claim 4, wherein the battery further comprises a third pressure relief mechanism, wherein the third pressure relief mechanism is disposed on the first wall portion, and the third pressure relief mechanism is configured to release the emissions in the first collection cavity.

6. The battery according to claim 4 or 5, wherein the first wall portion has a first surface facing the first layer of battery cells, the first surface being provided with a first through hole, wherein the first through hole is in communication with the first collection cavity, and the first through hole is disposed corresponding to the first pressure relief mechanism.

7. The battery according to any one of claims 4 to 6, wherein the box body further comprises a second wall portion disposed opposite to the second pressure relief mechanism in the second direction, wherein a second collection cavity is formed inside the second wall portion, and the second collection cavity is configured to collect emissions of the second battery cell when the second pressure relief mechanism is actuated.

8. The battery according to claim 7, wherein the second wall portion is integrally formed with the first wall portion.

9. The battery according to claim 7 or 8, wherein the battery further comprises a fourth pressure relief mechanism, wherein the fourth pressure relief mechanism is disposed on the second wall portion, and the fourth pressure relief mechanism is configured to release the emissions in the second collection cavity.

10. The battery according to any one of claims 7 to 9, wherein the second wall portion has a second surface facing the second layer of battery cells, the second surface being provided with a second through hole, wherein the second through hole is in communication with the second collection cavity, and the second through hole is disposed corresponding to the second pressure relief mechanism.

11. The battery according to any one of claims 1 to 10, wherein the battery further comprises a box body, the first layer of battery cells and the second layer of battery cells being disposed in the box body, wherein:
the box body comprises an isolation component located between the first layer of battery cells and the second layer of battery cells in the first direction, wherein the first layer of battery cells is connected to the isolation component, the second layer of battery cells is connected to the isolation component, and the isolation component carries the first layer of battery cells and the second layer of battery cells.

12. The battery according to claim 11, wherein a first flow channel for accommodating a heat exchange medium is formed inside the isolation component.

13. The battery according to claim 11 or 12, wherein:
the first layer of battery cells comprises a first battery cell group and a second battery cell group that are arranged at intervals in the second direction, and the second direction is perpendicular to the first direction; and
the box body further comprises a first partition piece, wherein the first partition piece is disposed on the isolation component, and the first partition piece is disposed between the first battery cell group and the second battery cell group in the second direction.

14. The battery according to claim 13, wherein in the second direction, the first pressure relief mechanism of the first battery cell group is disposed on the side of the first battery cell group facing away from the second battery cell group, and the first pressure relief mechanism of the second battery cell group is disposed on the side of the second battery cell group facing away from the first battery cell group.

15. The battery according to claim 13 or 14, wherein the first battery cell group and the second battery cell group are each connected to the first partition piece.

16. The battery according to any one of claims 13 to 15, wherein a second flow channel for accommodating a heat exchange medium is formed inside the first partition piece.

17. The battery according to any one of claims 13 to 16, wherein the first partition piece is integrally formed with or welded to the isolation component.

18. The battery according to any one of claims 11 to 17, wherein the box body further comprises two first wall portions disposed opposite to each other in the second direction, the second direction being perpendicular to the first direction, wherein the first layer of battery cells is disposed between the two first wall portions, and the isolation component is connected to the two first wall portions.

19. The battery according to claim 18, wherein the isolation component is integrally formed with or welded to the two first wall portions.

20. The battery according to claim 18 or 19, wherein the battery further comprises a first cover body, wherein the first cover body is connected to the two first wall portions, and the first layer of battery cells is located between the first cover body and the isolation component in the first direction.

21. The battery according to any one of claims 11 to 20, wherein:
the second layer of battery cells comprises a third battery cell group and a fourth battery cell group that are arranged at intervals in the second direction, and the second direction is perpendicular to the first direction; and
the battery further comprises a second partition piece, wherein the second partition piece is disposed on the isolation component, and the second partition piece is disposed between the third battery cell group and the fourth battery cell group in the second direction.

22. The battery according to claim 21, wherein in the second direction, the second pressure relief mechanism of the third battery cell group is disposed on the side of the third battery cell group facing away from the fourth battery cell group, and the second pressure relief mechanism of the fourth battery cell group is disposed on the side of the fourth battery cell group facing away from the third battery cell group.

23. The battery according to claim 21 or 22, wherein the third battery cell group and the fourth battery cell group are each connected to the second partition piece.

24. The battery according to any one of claims 21 to 23, wherein a third flow channel for accommodating a heat exchange medium is formed inside the second partition piece.

25. The battery according to any one of claims 21 to 24, wherein the second partition piece is integrally formed with or welded to the isolation component.

26. The battery according to any one of claims 21 to 25, wherein the box body further comprises two second wall portions disposed opposite to each other in the second direction, wherein the second layer of battery cells is disposed between the two second wall portions, and the isolation component is connected to the two second wall portions.

27. The battery according to claim 26, wherein the isolation component is integrally formed with or welded to the two second wall portions.

28. The battery according to claim 26 or 27, wherein the battery further comprises a second cover body, wherein the second cover body is connected to the two second wall portions, and the second layer of battery cells is located between the second cover body and the isolation component in the first direction.

29. The battery according to any one of claims 1 to 28, wherein the first direction is parallel to the direction of gravity.

30. An electric device, comprising the battery according to any one of claims 1 to 29.
